# EUROPEAN PATENT APPLICATION

(11) **EP 4 586 345 A2**
(43) Date of publication of application: **16.07.2025**
(21) Application number: 24218254.1
(22) Date of filing: 09.12.2024
(51) Int. Cl.: H01M 4/66, H01M 10/04, H01M 10/0585, H01M 50/533, H01M 50/534, H01M 50/54

(54) **ELECTRODE PLATE, ELECTRODE ASSEMBLY AND RECHARGEABLE BATTERY INCLUDING THE SAME**

(30) Priority: 10.01.2024 KR 20240004431
(71) Applicant: SAMSUNG SDI CO., LTD., Yongin-si, Gyeonggi-do 17084 (KR)
(72) Inventor: CHOI, Jinkyu, Yongin-si 17084 (KR)
(74) Representative: Michalski Hüttermann & Partner Patentanwälte mbB

(57) **Abstract**

Provided is an electrode plate (210, 220) comprising: an electrode plate layer (202); a current collector layer (201) comprising: a base layer (E); a first conductive layer (F1) and a second conductive layer (F2) respectively on an upper surface of the base layer (E) and a lower surface of the base layer (E); a current collector part (201a) having at least one surface on which the electrode plate layer (202) is located; an extension part (201b) extending outwardly from the current collector part (201a); and a bent part (201c) connected to the extension part (201b), and bent twice or more for the first conductive layer (F1) to contact the second conductive layer (F2).

## Description

### BACKGROUND

### 1. Field

The present disclosure relates to an electrode plate, an electrode assembly, and a rechargeable battery including the same.

### 2. Description of the Related Art

A rechargeable battery is manufactured in various shapes. Among these rechargeable batteries, a pouch battery may include an electrode assembly having a cathode plate, an anode plate, and an insulating separator interposed therebetween, and may also include a thin flexible pouch accommodating the electrode assembly. The pouch may accommodate the electrode assembly in its inner space.

The electrode assembly of the rechargeable battery may be largely divided into a winding type and a stacking type based on its structure. The stacking type may have good structural safety and suitable space utilization, and has been widely applied to a small- or medium-sized vehicle or the like. The stacking-type rechargeable battery may be a stack of the plurality of electrode plates and the separators.

A current collector layer applied to an electrode of the rechargeable battery (e.g., a cathode or an anode), may usually be a thin film made of electrically conductive copper, aluminum, nickel (Ni), stainless steel (SS), or the like. For example, a commercialized lithium-ion battery may use a copper foil current collector layer for the anode and an aluminum foil current collector layer for the cathode.

In recent years, the current collector layer having metal films coated on both surfaces of a resin has also been used, rather than the entire current collector layer made of copper or aluminum, to lower the manufacturing cost and weight of the rechargeable battery.

### SUMMARY

The present disclosure provides an electrode plate where electricity may be conducted between the electrode plates adjacent to each other, an electrode assembly and a rechargeable battery including the same.

However, the aspects of the present disclosure are not limited to the above, and other aspects of the present disclosure that are not mentioned herein will be clearly understood by those skilled in the art from the following description of the present disclosure.

According to one or more embodiments, provided is an electrode plate including an electrode plate layer, a current collector layer including a base layer, a first conductive layer and a second conductive layer respectively on an upper surface of the base layer and a lower surface of the base layer, a current collector part having at least one surface on which the electrode plate layer is located, an extension part extending outwardly from the current collector part, and a bent part connected to the extension part, and bent twice or more for the first conductive layer to contact the second conductive layer.

The base layer may include polyethylene terephthalate (PET).

The base layer may include one or more of polyamide, polyimide, polybutylene terephthalate, polyethylene naphthalate, polycarbonate, polyethylene, polypropylene, polyethylene propylene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene ether, polyphenylene sulfide, polyethylene glycol, polysulfur nitride, polyphenylene, polypyrrole, polyaniline, polythiophene, polypyridine, cellulose, starch, protein, epoxy resin, or phenol resin, or one or more derivatives, crosslinked products, or copolymers thereof.

The base layer may include an additive including one or more of a metallic material or an inorganic non-metallic material.

The first conductive layer and the second conductive layer may include aluminum.

The first conductive layer and the second conductive layer may include one or more of a metallic material, a carbon-based conductive material, or a conductive polymer material.

The bent part may have a jelly roll shape.

According to one or more embodiments, provided is an electrode assembly including a separator, and electrode plates stacked with the separator interposed therebetween, and including a current collector layer including a base layer, a first conductive layer and a second conductive layer respectively on an upper surface and a lower surface of the base layer, and an electrode plate layer on a portion of the current collector layer, and wherein the current collector layer further includes a current collector part having at least one surface on which the electrode plate layer is located, an extension part extending outwardly from the current collector part, and a bent part connected with the extension part, and bent twice or more for the first conductive layer to contact the second conductive layer.

The current collector layer may include adjacent bent parts coupled to each other in a vertical direction.

The electrode plates may include a first electrode plate and a second electrode plate.

The base layer may include polyethylene terephthalate (PET).

The base layer may include one or more of polyamide, polyimide, polybutylene terephthalate, polyethylene naphthalate, polycarbonate, polyethylene, polypropylene, polyethylene propylene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene ether, polyphenylene sulfide, polyethylene glycol, polysulfur nitride, polyphenylene, polypyrrole, polyaniline, polythiophene, polypyridine, cellulose, starch, protein, epoxy resin, or phenol resin, or one or more derivatives, crosslinked products, or copolymers thereof.

The base layer may include an additive including one or more of a metallic material or an inorganic non-metallic material.

The first conductive layer and the second conductive layer may include aluminum.

The first conductive layer and the second conductive layer may include one or more of a metallic material, a carbon-based conductive material, or a conductive polymer material.

The bent part may have a jelly roll shape.

According to one or more embodiments, provided is a rechargeable battery including the electrode assembly described above, and a case accommodating the electrode assembly.

As set forth above, according to the present disclosure, the electrode plate included in the electrode assembly may include the current collector layer including the bent part. The first conductive layer of any one current collector layer may be connected to the second conductive layer.

As the bent parts of the plurality of electrode plates are connected to each other, the first electrode plates and the second electrode plates may respectively be electrically connected to each other in the electrode assembly.

As such, the electrode assembly according to one or more embodiments of the present disclosure does not need to perform the conduction process that uses additional folding of a foil and inserting the foil between the electrode plates one by one, as in the prior art. Therefore, the electrode assembly of the present disclosure may achieve not only reduced manufacturing time but also lower manufacturing cost.

### BRIEF DESCRIPTION OF THE DRAWINGS

The following drawings attached to the specification illustrate embodiments of the present disclosure, and serve to allow the technical features of the present disclosure to be better understood together with the detailed description of the present disclosure described below. Therefore, the present disclosure should not be construed as limited to matters described with reference to the drawings.
FIG. 1 is a perspective view showing a rechargeable battery installed with an electrode plate, and an electrode assembly including the same, according to one or more embodiments of the present disclosure.
FIG. 2 is a cross-sectional view showing the plurality of electrode plates coupled to each other.
FIG. 3 is a perspective view showing the electrode plate extracted from the rechargeable battery in FIG. 1.
FIGS. 4 to 6 are cross-sectional views sequentially showing a process of coupling the electrode plates to each other.

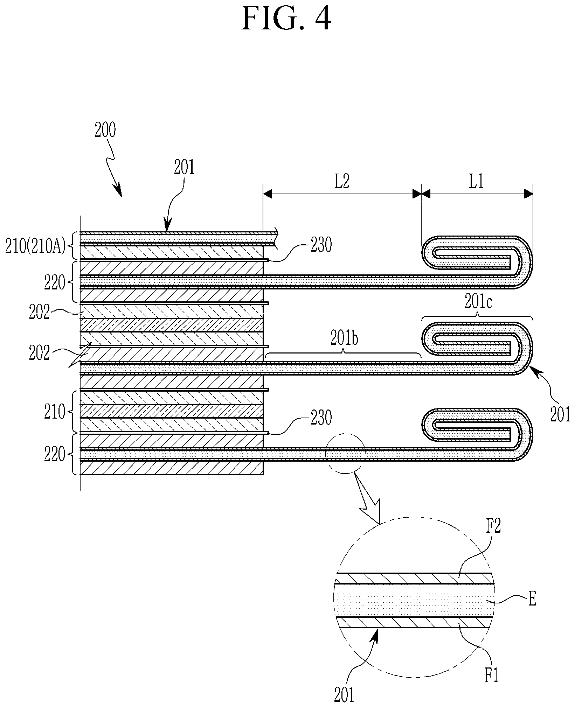

FIG. 4 is a cross-sectional view showing the electrode plates parallel to each other in a vertical direction.

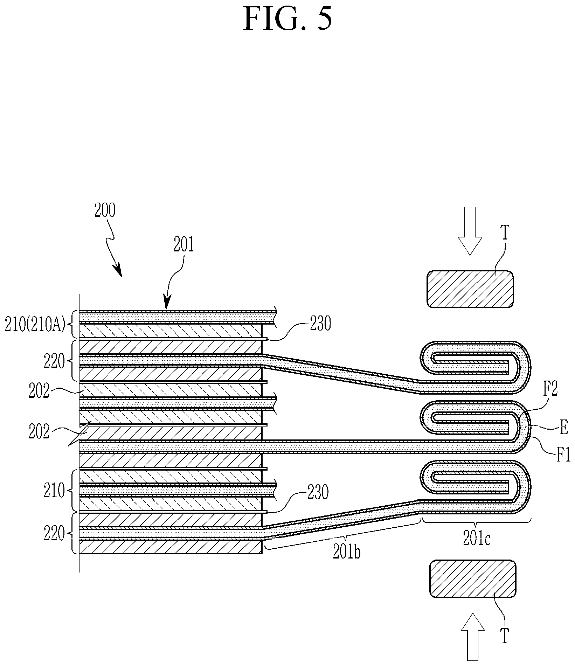

FIG. 5 is a cross-sectional view showing a process of welding respective bent parts of a current collector layer to each other by ultrasonic welding.

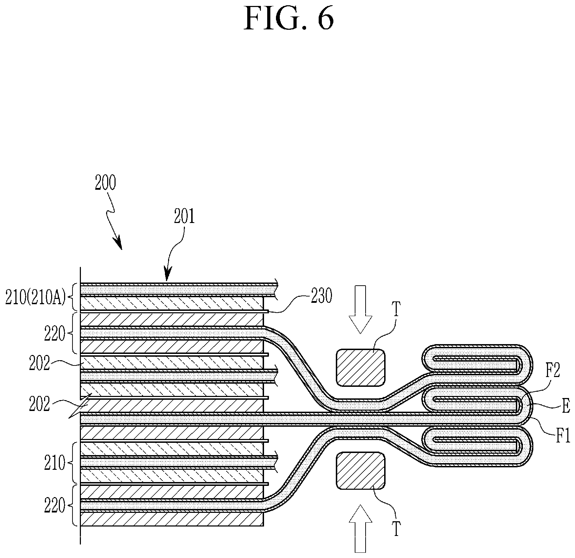

FIG. 6 is a cross-sectional view showing a process of welding respective extension parts of the current collector layer to each other by the ultrasonic welding.

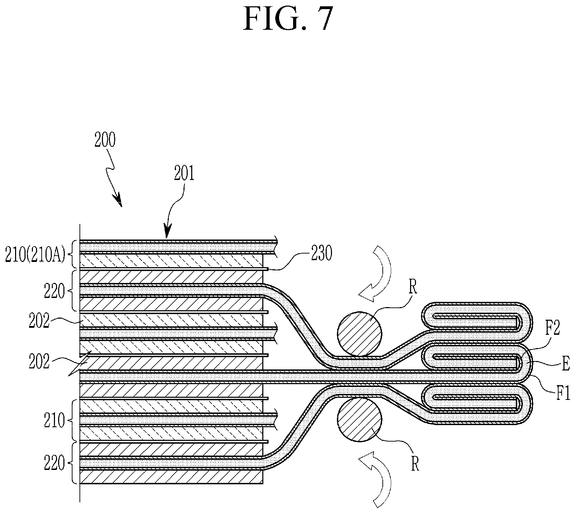

FIG. 7 is a cross-sectional view showing a process of pressing the extension part by using a roller.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure.

A person of ordinary skill in the art would appreciate, in view of the present disclosure in its entirety, that the present disclosure covers all modifications, equivalents, and replacements within the idea and technical scope of the present disclosure, that each of the features of embodiments of the present disclosure may be combined with each other, in part or in whole, and technically various interlocking and operating are possible, and that each embodiment may be implemented independently of each other, or may be implemented together in an association, unless otherwise stated or implied.

In the drawings, the relative sizes of elements, layers, and regions may be exaggerated for clarity and/or descriptive purposes. Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "over," "higher," "upper side," "side" (e.g., as in "sidewall"), and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a schematic cross-sectional view" means when a schematic cross-section taken by vertically cutting an object portion is viewed from the side. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list. When "C to D" is stated, it means C or more and D or less, unless otherwise specified.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the terms "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Hereinafter, the description describes a rechargeable battery including an electrode plate in detail with reference to the attached drawings before describing the electrode plate according to one or more embodiments of the present disclosure.

In stacked electrode plates using a resin-metal composite substrate, as described above, the entire electrode plate may not be utilized, or may not be electrically active if a plurality of substrate tabs are welded using a prior art method.

In the resin-metal composite substrate, the metal films may be located on both surfaces of a resin sheet. However, the resin may have low conductivity, which may make it difficult to electrically connect both the surfaces to each other. For example, in the stacked electrode plates using the plurality of electrode plates, their uncoated parts may be joined together and welded to an electrode terminal. However, the metal film may have only one surface in contact therewith, rather than both surfaces conducting electricity to each other, thus making the welding impractical or impossible.

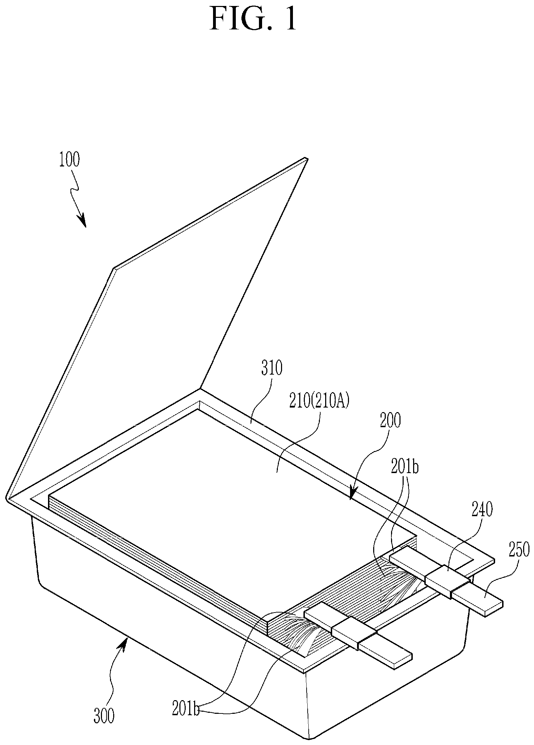

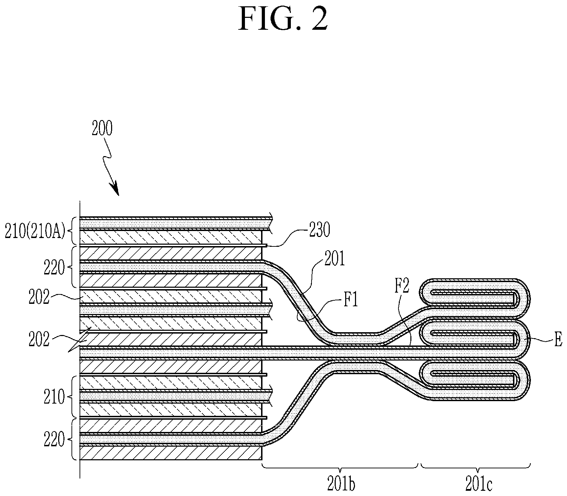

FIG. 1 is a perspective view showing a rechargeable battery installed with an electrode plate, and an electrode assembly including the same, according to one or more embodiments of the present disclosure, and FIG. 2 is a cross-sectional view showing the plurality of electrode plates coupled to each other.

Referring to FIGS. 1 and 2, a rechargeable battery 100 may include an electrode assembly 200 and a case 300.

The electrode assembly 200 may include a plurality of electrode plates 210 and 220 and a separator 230. The plurality of electrode plates 210 and 220 may include a first electrode plate 210 and a second electrode plate 220. The electrode assembly 200 may be a stack including the first electrode plates 210, the second electrode plates 220, and the separators 230 being repeatedly wound or stacked. For example, the electrode assembly 200 may be a stacked type where the electrode plates 210 and 220 are stacked in a plurality of layers. In one or more embodiments, the electrode assembly 200 may be a repeatedly wound jelly-roll type. The present disclosure describes that the electrode assembly 200 is the stacked type as an example.

In one or more embodiments, a manufacturing process of the stacked type electrode assembly 200 may generally involve a primary stacking process and a secondary stacking process.

In the primary stacking process, full cathodes (or double-sided cathodes) and full anodes (or double-sided anodes) may be stacked. The full cathodes may be the remaining ones of the plurality of first electrode plates 210 except for the outermost first electrode plate 21 0A. In one or more embodiments, the full anodes may be the second electrode plates 220.

In the secondary stacking process, half cathodes (or one-sided cathodes) may be stacked on one or more of the two outermost sides in a stacking direction. The half cathode may be the outermost first electrode plate 210A of the first electrode plates 210.

For convenience, FIG. 2 shows the electrode assembly 200 where the half cathode is stacked on the outermost, upper side of the electrode assembly 200. In one or more embodiments, the half cathodes may be respectively stacked on the two outermost sides of the electrode assembly 200 (e.g., on both the upper and lower outermost sides thereof).

The full cathode or the full anode is the electrode where an active material is coated on both surfaces of a substrate. The half cathode is the electrode where an electrode plate layer is located only on one surface of the current collector layer. The electrode plate layer may be an active material layer. The description omits details of the full cathode, the full anode, and the half cathode.

The separator 230 may be interposed between the first electrode plate 210 and the second electrode plate 220. The separator 230 may reduce or prevent the likelihood of a short circuit occurring between the first electrode plate 210 and the second electrode plate 220, and enable movements of lithium ions. To this end, the separator 230 may be relatively larger than the current collector layer.

A material of the separator 230 may be, for example, polyethylene, polypropylene, or a composite film of polyethylene and polypropylene, and is not limited thereto.

The separator 230 may be cut into unit lengths, and may be located between the first electrode plate 210 and the second electrode plate 220. One ribbon-shaped separator 230 may be located in a zigzag shape between the first electrode plate 210 and the second electrode plate 220. In one or more embodiments, the separator 230 may be wound between the first electrode plate 210 and the second electrode plate 220 in one direction.

As such, the separator 230 is not limited to any given form. The separator 230 may be cut into unit lengths, and may be located between the first electrode plate 210 and the second electrode plate 220.

The case 300 may accommodate the electrode assembly 200. The electrode assembly 200 described above may be accommodated in the case 300 together with electrolyte.

The case 300 as described above may be any one of a pouch type, a cylindrical type, and a square type. The pouch-type case 300 may be manufactured by bending plate-shaped exterior materials to face each other, then pressing or drawing one surface, and having a recess defined in one surface.

The electrode assembly 200 may be accommodated in the recess, in one or more embodiments. A sealing part 310 may be located in an outer periphery of the recess, and the sealing part 310 may be sealed using a method, such as heat fusion, while the electrode assembly 200 is accommodated in the recess.

In one or more embodiments, in the plurality of electrode plates, the first electrode plate 210 described above may be the anode, and the second electrode plate 220 may be the cathode, or vice versa. The first electrode plate 210 and the second electrode plate 220 may be electrically connected to the outside of the rechargeable battery 100 through a strip terminal 250. In one or more embodiments, an insulating tape 240 may be attached to a portion of the strip terminal 250 that contacts the case 300. The insulating tape 240 may reduce or prevent the likelihood of the strip terminal 250 and the case 300 conducting electricity to each other.

Hereinafter, the description describes the electrode assembly 200 according to one or more embodiments of the present disclosure in more detail with reference to the drawings.

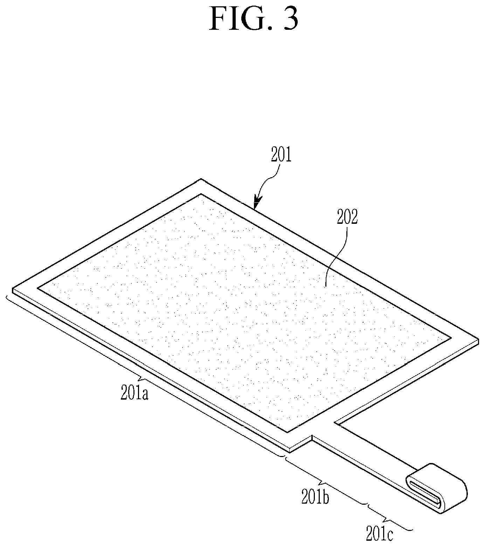

FIG. 2 is a cross-sectional view showing the plurality of electrode plates coupled to each other, and FIG. 3 is a perspective view showing the electrode plate extracted from the rechargeable battery in FIG. 1.

Referring to FIGS. 2 and 3, the electrode assembly 200 according to one or more embodiments of the present disclosure may include the plurality of electrode plates 210 and 220, as described above, and each of the plurality of electrode plates 210 and 220 may include a current collector layer 201, and an electrode plate layer 202 located on a portion of the current collector layer 201. The electrode plate layer 202 may be the active material layer of the electrode that is used in the general rechargeable battery, and the description omits its details.

Based on its internal structure, the current collector layer 201 may include a base layer E, and a first conductive layer F1 and a second conductive layer F2 respectively located on the lower and upper surfaces of the base layer E.

The base layer E may include, for example, polyethylene terephthalate (PET). In one or more embodiments, the base layer E may include, for example, one or more of polyamide, polyimide, polyimide, polybutylene terephthalate, polyethylene naphthalate, polycarbonate, polyethylene, polypropylene, polyethylene propylene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene ether, polyphenylene sulfide, polyethylene glycol, polysulfur nitride, polyphenylene, polypyrrole, polyaniline, polythiophene, polypyridine, cellulose, starch, protein, epoxy resin, phenol resin, derivatives thereof, crosslinked products thereof, or copolymers thereof.

In one or more embodiments, the base layer E may further include an additive. The additive may include one or more of a metallic material or an inorganic non-metallic material. For example, the metallic material additive may be one or more of aluminum, aluminum alloy, copper, copper alloy, nickel, nickel alloy, titanium, titanium alloy, iron, iron alloy, silver, or a silver alloy.

In one or more embodiments, the inorganic non-metallic material additive may be one or more of a carbon-based material, aluminum oxide, silicon dioxide, silicon nitride, silicon carbide, boron nitride, silicates, or titanium oxide, and may be, for example, one or more of a glass material, a ceramic material, or a ceramic composite material. The carbon-based material additive may be, for example, one or more of graphite, superconducting carbon, acetylene black, carbon black, KETJENBLACK, carbon dots, carbon nanotubes, graphene, or carbon nanofibers (KETJENBLACK^{®} being a registered trademark of AKZO NOBEL CHEMICALS B.V., Netherlands).

In one or more embodiments, the additive may further include the carbon-based material coated with the metallic material. For example, the additive may be one or more of graphite powders coated with nickel or carbon fibers coated with nickel.

In one or more embodiments, each of the first conductive layer F1 and the second conductive layer F2 may include aluminum. Each of the first conductive layer F1 and the second conductive layer F2 may include one or more of the metallic material, a carbon-based conductive material, or a conductive polymer material.

In one or more embodiments, based on its external shape, the current collector layer 201 described above may include a current collector part 201 a, an extension part 201b, and a bent part 201c.

The current collector part 201a may have at least one surface on which the electrode plate layer 202 is coated. For example, the current collector part 201a may have a square plate shape. For example, referring to FIG. 3, the electrode plate layer 202 may be coated on the majority of the current collector part 201a excluding the edge area thereof. The edge area of the current collector part 201a may be an uncoated part on which the electrode plate layer 202 is not coated.

In one or more embodiments, the electrode plate layer 202 may be coated on an entirety of the current collector part 201a. The current collector part 201a may not include the uncoated part, and the extension part 201b described below may be the uncoated part.

The extension part 201b may be connected to the current collector part 201a, and may extend outwardly from the current collector part 201a. For example, the extension part 201b may have a ribbon shape.

The bent part 201c may be connected with the extension part 201b. The bent part 201c may be bent twice or more for the first conductive layer F1 to contact the second conductive layer F2. For convenience of explanation, FIG. 2 shows that the bent part 201c is bent twice. The entire bent part 201c may have a jelly roll shape in which the bent part 201c is repeatedly bent in one direction.

In one or more embodiments, as described above, the plurality of electrode plates 210 and 220 may include the first electrode plate 210 and the second electrode plate 220, and the current collector layer 201 of each of the first electrode plate 210 and the second electrode plate 220 may include the extension part 201b and the bent part 201c.

The current collector layer 201 included in each of the plurality of electrode plates 210 and 220 may have the adjacent bent parts 201c coupled to each other in a vertical direction.

If the electrode assembly 200 is the stacked type, the first electrode plate 210 and the second electrode plate 220 may be alternately stacked while having the separator 230 interposed therebetween. The plurality of first electrode plates 210 and the plurality of second electrode plates 220 may be provided.

The drawings show that three first electrode plates 210 and three second electrode plates 220 are respectively arranged, but the present disclosure is not limited thereto, and the number of the first and second electrode plates 210 and 220 may be changed based on a design of the rechargeable battery 100.

In the electrode assembly 200 according to one or more embodiments of the present disclosure, the bent parts 201c of the first electrode plate 210 may be parallel to each other in the vertical direction, and the bent parts 201c of the second electrode plate may be parallel to each other in the vertical direction. In one or more embodiments, the bent part 201c of the first electrode plate 210 may be spaced apart from the bent part 201c of the second electrode plate 220 in a horizontal direction.

In one or more embodiments, the extension part 201b may connect the current collector part 201a and the bent part 201c to each other. The extension parts 201b of the first electrode plate 210 may be parallel to each other in the vertical direction, and the extension parts 201b of the second electrode plate 220 may be parallel to each other in the vertical direction.

In one or more embodiments, the bent parts 201c may be coupled to each other by welding. For example, the plurality of the bent part 201c may be assembled together and coupled to each other by the welding method, such as laser, resistance welding, or ultrasonic welding.

In one or more embodiments, a length of the extension part 201b may be less than a length of the bent part 201c. In one or more embodiments, the length of the extension part 201b may be more than the length of the bent part 201c. The length of the bent part 201c and the extension part 201b may be changed based on the design of the electrode assembly 200, and these parts are not limited to any given length.

The electrode assembly 200 described above may have the bent part 201c bent twice or more. The plurality of electrode plates 210 and 220 may conduct electricity to each other even if only the bent parts 201c are welded to each other, while the extension parts 201b are not welded to each other. In one or more embodiments, the extensions parts 201b may further be welded to each other to improve a coupling force between the electrode plates, but the present disclosure is not limited thereto.

The present disclosure describes the manufacturing process of the electrode assembly 200 according to one or more embodiments with reference to the drawings.

FIGS. 4 to 6 are cross-sectional views sequentially showing a process of coupling the electrode plates to each other, and FIG. 4 is a cross-sectional view showing the electrode plates parallel to each other in the vertical direction.

Referring to FIG. 4, the first electrode plate 210 and the second electrode plate 220 may be stacked. The first electrode plate 210 and the second electrode plate 220 may be sequentially stacked while having the separator 230 interposed therebetween.

FIG. 5 is a cross-sectional view showing a process of welding the bent parts of the current collector layer to each other by the ultrasonic welding.

Referring to FIG. 5, the plurality of second electrode plates 220 may have the bent parts 201c welded to each other by a welding horn T used in the ultrasonic welding. The first and second conductive layers F1 and F2 of any one of the current collector layer 201 may be electrically connected to each other. The plurality of second electrode plates 220 may be electrically connected to each other by welding only the bent parts 201c to each other, even if the extension parts 201b are not welded to each other. In one or more embodiments, the plurality of first electrode plates 210 may also be electrically connected to each other.

FIG. 6 is a cross-sectional view showing a process of welding the respective extension parts of the current collector layer to each other by the ultrasonic welding.

Referring to FIG. 6, the plurality of second electrode plates 220 may have the extension parts 201b welded to each other by the welding horn T used in the ultrasonic welding. The second conductive layer F2 of any one current collector layer 201 and the first conductive layer F1 of the current collector layer 201 adjacent thereto may be electrically connected to each other. The extension parts 201b may be welded to each other in this way to thus further improve the coupling force between the plurality of second electrode plates 220.

As described above, the process of welding the extension parts 201b to each other may be selectively performed.

FIG. 7 is a cross-sectional view showing a process of pressing the extension part by using a roller.

In one or more embodiments, referring to FIG. 7, the extension part 201b may be pressed using a roller R before the extension parts 201b are welded to each other. The welding may be performed while the extension parts 201b are in stable close contact with each other, thus welding the extension parts 201b to each other while being located in parallel to each other in the vertical direction.

In a rechargeable battery including a resin-metal composite substrate, the metal film may have only respective ones of the surfaces contacting each other if the uncoated parts of the electrodes are welded to each other. To solve this problem, its manufacturing process may be increased by further including a conduction process for allowing the metal films to conduct electricity to each other.

Referring back to FIG. 2, each of the plurality of electrode plates 210 and 220 included in the electrode assembly 200 according to one or more embodiments of the present disclosure may include the bent part 201c. In one or more embodiments, as the bent parts 201c are connected to each other, the first and second conductive layers F1 and F2 of any one current collector layer 201 may be connected to each other to electrically connect, not only the first electrode plates 210 to each other, but also the second electrode plates 220 to each other.

As a result, the electrode assembly 200 according to one or more embodiments of the present disclosure does not need to perform the conduction process that uses additional folding of a foil and inserting the foil between the electrode plates one by one. The electrode assembly 200 of the present disclosure may achieve not only a reduced manufacturing time, but also a lower manufacturing cost.

Although the various embodiments of the present disclosure have been described above, the accompanying drawings and detailed description of the present disclosure described above are merely illustrative and used only to explain the present disclosure, and are not intended to limit the meaning or scope of the present disclosure set forth in the claims. Therefore, it will be understood by those skilled in the art that various modifications and other equivalent embodiments may be derived from the present disclosure. An actual technical scope of the present disclosure is to be defined by the technical features of the appended claims, with functional equivalents thereof to be included therein.

### Description of Some of the Reference Characters

| | | | |
|---|---|---|---|
| 100: | rechargeable battery | 200: | electrode assembly |
| 201: | current collector layer | 201a: | current collector part |
| 201b: | extension part | 201c: | bent part |
| 202: | electrode plate layer | 210: | first electrode plate |
| 220: | second electrode plate | 230: | separator |
| 300: | case | E: | base layer |
| F1: | first conductive layer | F2: | second conductive layer |

## Claims

1. An electrode plate (210, 220) comprising:
an electrode plate layer (202);
a current collector layer (201) comprising:
a base layer (E);
a first conductive layer (F1) and a second conductive layer (F2) respectively on an upper surface of the base layer (E) and a lower surface of the base layer (E);
a current collector part (201a) having at least one surface on which the electrode plate layer (202) is located;
an extension part (201b) extending outwardly from the current collector part (201a); and
a bent part (201c) connected to the extension part (201b), and bent twice or more for the first conductive layer (F1) to contact the second conductive layer (F2).

2. An electrode assembly (200) comprising:
a separator (230); and
electrode plates (210, 220) stacked with the separator (230) interposed therebetween, and comprising:
a current collector layer (201) comprising a base layer (E);
a first conductive layer (F1) and a second conductive layer (F2) respectively on an upper surface and a lower surface of the base layer (E); and
an electrode plate layer (202) on a portion of the current collector layer (201), and
wherein the current collector layer (201) further comprises:
a current collector part (201a) having at least one surface on which the electrode plate layer (202) is located,
an extension part (201b) extending outwardly from the current collector part (201a), and
a bent part (201c) connected with the extension part (201b), and bent twice or more for the first conductive layer (F1) to contact the second conductive layer (F2).

3. The electrode plates (210, 220) according to claim 1, or the electrode assembly (200) according to claim 2, wherein the current collector layer (201) comprises adjacent bent parts coupled to each other in a vertical direction.

4. The electrode plates (210, 220) according to any of claims 1 or 3, or the electrode assembly (200) according to any of claims 2 or 3, wherein the electrode plates (210, 220) comprise a first electrode plate (210) and a second electrode plate (220).

5. The electrode plates (210, 220) according to any of claims 1, 3 or 4, or the electrode assembly (200) according to any of claims 2 to 4, wherein the base layer (E) comprises polyethylene terephthalate (PET).

6. The electrode plates (210, 220) according to any of claims 1, or 3 to 5, or the electrode assembly (200) according to any of claims 2 to 5, wherein the base layer (E) comprises one or more of polyamide, polyimide, polybutylene terephthalate, polyethylene naphthalate, polycarbonate, polyethylene, polypropylene, polyethylene propylene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene ether, polyphenylene sulfide, polyethylene glycol, polysulfur nitride, polyphenylene, polypyrrole, polyaniline, polythiophene, polypyridine, cellulose, starch, protein, epoxy resin, or phenol resin, or one or more derivatives, crosslinked products, or copolymers thereof.

7. The electrode plates (210, 220) according to any of claims 1, or 3 to 6, or the electrode assembly (200) according to any of claims 2 to 6, wherein the base layer (E) comprises an additive comprising one or more of a metallic material or an inorganic non-metallic material.

8. The electrode plates (210, 220) according to any of claims 1, or 3 to 7, or the electrode assembly (200) according to any of claims 2 to 7, wherein the first conductive layer (F1) and the second conductive layer (F2) comprise aluminum.

9. The electrode plates (210, 220) according to any of claims 1, or 3 to 8, or the electrode assembly (200) according to any of claims 2 to 8, wherein the first conductive layer (F1) and the second conductive layer (F2) comprise one or more of a metallic material, a carbon-based conductive material, or a conductive polymer material.

10. The electrode plates (210, 220) according to any of claims 1, or 3 to 9, or the electrode assembly (200) according to any of claims 2 to 9, wherein the bent part (201c) has a jelly roll shape.

11. The electrode assembly (200) according to claim 4, wherein the first electrode plates (210) and the second electrode plates (220) are respectively electrically connected to each other.

12. A rechargeable battery (100) comprising:
the electrode assembly (200) according to any of claims 2 to 11; and
a case (300) accommodating the electrode assembly (200).

13. The rechargeable battery (100) according to claim 12, wherein the first electrode plate (210) and the second electrode plate (220) are electrically connected to an outside of the rechargeable battery (100) through a strip terminal (250).

14. The rechargeable battery (100) according to claim 13, wherein an insulating tape (240) is attached to a portion of the strip terminal (250) that contacts the case (300).
